# EUROPÄISCHE PATENTSCHRIFT

(11) **EP 4 000 720 B1**
(45) Veröffentlichungstag und Bekanntmachung des Hinweises auf die Patenterteilung: **05.06.2024**
(21) Anmeldenummer: 21207252.4
(22) Anmeldetag: 09.11.2021
(51) Int. Cl.: B01D 63/06, B01D 63/08, H01M 8/04

(54) **BEFEUCHTER**
HUMIDIFIER
HUMIDIFICATEUR

(30) Priorität: 19.11.2020 DE 102020214602
(43) Veröffentlichungstag der Anmeldung: 25.05.2022
(73) Patentinhaber: MAHLE International GmbH, 70376 Stuttgart (DE)
(72) Erfinder: KAISER, Sven Alexander, 71336 Waiblingen (DE)
(74) Vertreter: BRP Renaud & Partner mbB Rechtsanwälte Patentanwälte Steuerberater

(56) Entgegenhaltungen:
- EP-A1- 3 734 731
- WO-A1-2022/002582
- DE-A1-102014 006 394
- DE-U1-202008 003 717
- US-A- 3 993 816
- US-A1- 2014 291 874

## Beschreibung

Die Erfindung betrifft einen Befeuchter für ein Brennstoffzellensystem nach dem Obergriff des Anspruchs 1.

Ein Befeuchter für ein Brennstoffzellensystem ist beispielweise aus der DE 10 2013 020 503 A1 bekannt. In dem Befeuchter wird dabei eine trockene Kathoden-Zuluft durch eine feuchte Kathoden-Abluft befeuchtet und dadurch die Effizienz des Brennstoffzellensystems verbessert. Der Befeuchter weist dabei üblicherweise einen quaderförmigen Membranbock aus mehreren wasser- bzw. wasserdampfdurchlässigen Membranen und ein Gehäuse auf, in dem der Membranblock aufgenommen ist. In dem Membranblock werden die Kathoden-Zuluft und die Kathoden-Abluft getrennt voneinander geführt, wobei das Wasser bzw. der Wasserdampf über die Membranen des Membranblocks aus der feuchten Kathoden-Abluft in die trockene Kathoden-Zuluft übertragen wird.

Das Zuleiten und das Ableiten der Kathoden-Zuluft und der Kathoden-Abluft zu/aus dem Membranblock erfolgt üblicherweise an Durchströmungsflächen. Aufbaubedingt weist der Membranblock vier Durchströmungsflächen, die den Umfang des Membranblocks bilden, und zwei luftdichte Stirnflächen, die den Membranblock stirnseitig verschließen, auf. Den jeweiligen Durchströmungsflächen sind innerhalb des Gehäuses Luftkammern zum Zuleiten und zum Ableiten der Kathoden-Zuluft und der Kathoden-Abluft zugeordnet, die zweckgemäß voneinander luftdicht getrennt sind. Dazu wird öfters eine ein- oder mehrteilige Dichtanordnung verwendet, die die Durchströmungsflächen entlang deren Verbindungskanten miteinander und an den Stirnflächen voneinander abdichtet. Die Dichtanordnung ist dabei komplex aufgebaut und aufwändig in der Herstellung und Montage.

EP 3 734 731 A1, US 2014/0291874 A1 und DE 20 2008 003 717 U1 offenbaren jeweils einen Befeuchter mit einem Hohlfasermembranblock. Die Dichtanordnung ist hier durch zwei Ringdichtungen abgebildet, die den Hohlfasermembranblock stirnseitig zu dem Gehäuse abdichten.

US 3 993 816 A offenbart einen Befeuchter mit einem Hohlfasermembranblock. Hier ist die Dichtanordnung durch einen Rahmen, der an dem Hohlfasermembranblock dichtend anliegt, abgebildet.

DE 10 2014 006 394 A1 offenbart einen Befeuchter mit einem Membranblock aus mehreren Membranen. Der Membranblock ist an seinen Längskanten über jeweils eine längliche Dichtung zu dem Gehäuse abgedichtet.

WO 2022/002582 A1 offenbart eine Befeuchter mit einem Membranblock aus mehreren Membranen. Die Dichtanordnung ist hier durch eine einteilige Dichtung abgebildet, wobei die einteilige Dichtung den Membranblock zu dem Gehäuse an allen seinen Kanten abdichtet.

Die Aufgabe der Erfindung ist es daher, für einen Befeuchter der gattungsgemäßen Art eine verbesserte oder zumindest alternative Ausführungsform anzugeben, bei der die beschriebenen Nachteile überwunden werden.

Diese Aufgabe wird erfindungsgemäß durch den Gegenstand des unabhängigen Anspruchs 1 gelöst. Vorteilhafte Ausführungsformen sind Gegenstand der abhängigen Ansprüche.

Ein Befeuchter ist für ein Brennstoffzellensystem zum Befeuchten einer trockenen Kathoden-Zuluft mit einer feuchten Kathoden-Abluft vorgesehen. Bei dem Befeuchter handelt es sich insbesondere um einen Membran-Befeuchter. Der Befeuchter weist dabei ein Gehäuse, einen Membranblock und eine Dichtanordnung auf. Der Membranblock ist quaderförmig und weist zwei luftdicht verschlossene und einander gegenüberliegende Stirnflächen und vier Durchströmungsflächen auf. Der Membranblock ist dabei so in dem Gehäuse aufgenommen, dass zwischen der jeweiligen Durchströmungsfläche des Membranblocks und einem gegenüberliegenden Bereich des Gehäuses jeweils eine Luftkammer zum Zuleiten oder zum Ableiten der Kathoden-Abluft oder der Kathoden-Zuluft zu/aus dem Membranblock gebildet ist. Die jeweiligen Luftkammern sind innerhalb des Gehäuses mittels der Dichtanordnung luftdicht voneinander getrennt. Erfindungsgemäß ist die Dichtanordnung aus drei oder vier voneinander separaten Ringdichtungen gebildet, wobei die jeweilige Ringdichtung jeweils einer der Durchströmungsflächen des Membranblocks zugeordnet ist. Die jeweilige Ringdichtung umläuft dabei die jeweilige zugeordnete Durchströmungsfläche randseitig und ist zwischen der jeweiligen Durchströmungsfläche und dem Gehäuse dichtend angeordnet.

Die Dichtanordnung ist ausschließlich aus drei oder vier Ringdichtungen bzw. aus genau drei oder genau vier Ringdichtungen gebildet. Die Dichtanordnung weist demnach keine weiteren separaten Elemente zum Abdichten des Membranblocks zu dem Gehäuse auf. Dadurch ist die Dichtanordnung besonders einfach ausgeführt. Die jeweiligen Ringdichtungen sind separat voneinander bzw. physisch voneinander getrennt und umlaufen dabei randseitig ausschließlich die zugeordnete Durchströmungsfläche bzw. schließen ausschließlich die zugeordnete Durchströmungsfläche ein. Die jeweilige Ringdichtung liegt also ausschließlich auf der zugeordneten Durchströmungsfläche und ist flach bzw. eben ausgebildet. Insbesondere ist dabei eine Abwinklung bzw. ein Abknicken der jeweiligen Ringdichtung über die Verbindungskanten des Membranblocks vermieden. Anders formuliert, überbrücken die jeweiligen Ringdichtungen die Verbindungskanten des Membranblocks nicht. Vorteilhaftweise ist eine derartige flach bzw. eben liegende Ringdichtung vereinfacht und kostengünstig herstellbar. Dadurch ist die Dichtanordnung einfach aufgebaut und daher vereinfacht herstellbar und montierbar.

Bei einer vorteilhaften Weiterbildung des Befeuchters kann vorgesehen sein, dass das Gehäuse eine innenliegende Stützstruktur aufweist. Der Membranblock kann durch die Stützstruktur vorteilhafterweise dreh- und verschiebefest in dem Gehäuse positioniert sein. Die jeweiligen Ringdichtungen sind zwischen den jeweiligen Durchströmungsflächen des Membranblocks und der Stützstruktur des Gehäuses dichtend angeordnet. Dazu kann die Stützstruktur Dichtflächen aufweisen, an denen die jeweiligen Ringdichtungen dichtend angeordnet sind. Zudem kann die Stützstruktur auch Zusatzrippen bzw. Zusatzflächen zum Abstützen des Membranblocks an den Durchströmungsflächen und/oder an den Stirnflächen aufweisen. Insbesondere können die Zusatzrippen bzw. Zusatzflächen zur Vermeidung von Schwingungen des Membranblocks im Betrieb des Befeuchters beitragen. Es versteht sich, dass die Stützstruktur und der Membranblock scheuergeschützt aneinander angeordnet sind.

Vorteilhafterweise kann die Stützstruktur durch einen quaderförmigen bereichsweise offenen Innenkäfig gebildet und der Membranblock in dem Innenkäfig aufgenommen sein. Die jeweiligen Ringdichtungen können dabei zwischen den jeweiligen Durchströmungsflächen des Membranblocks und dem Innenkäfig dichtend angeordnet sein.

Bei einer vorteilhaften Weiterbildung des Befeuchters kann vorgesehen sein, dass die Ringdichtung einen Dichtrahmen und eine von dem Dichtrahmen abstehende Dichtlippe aufweist. Der Dichtrahmen ist dabei von der Dichtlippe abgewandt mit der zugeordneten Durchströmungsfläche stoffschlüssig verbunden. Vorzugsweise ist der Dichtrahmen mit der zugeordneten Durchströmungsfläche verklebt oder verschweißt. Die Dichtlippe ist dann zu dem Gehäuse zugewandt angeordnet und liegt an dem Gehäuse dichtend an. Vorteilhafterweise kann die Dichtlippe nach innen bzw. zur Mitte der jeweiligen Ringdichtung hin geneigt ausgebildet sein. Bei der Montage des Befeuchters kann vorteilhafterweise die Dichtanordnung bzw. die jeweiligen Ringdichtungen auf dem Membranblock vormontiert bzw. befestigt sein und der Membranblock anschließend in dem Gehäuse angeordnet werden. Die Herstellung des Befeuchters kann dadurch deutlich vereinfacht werden.

Vorteilhafterweise kann die jeweilige Ringdichtung die jeweilige zugeordnete Durchströmungsfläche des Membranblocks randseitig nach innen beabstandet umlaufen, so dass der jeweiligen Durchströmungsfläche zugeordnete Verbindungskanten frei liegen und die jeweilige Ringdichtung über die jeweiligen Verbindungskanten nicht übergeht. Mit anderen Worten ist eine Abwinklung bzw. ein Abknicken der jeweiligen Ringdichtung über die Verbindungskanten des Membranblocks sicher vermieden. Vorteilhafterweise kann die jeweilige Ringdichtung mit der jeweiligen zugeordneten Durchströmungsfläche stoffschlüssig verbunden, vorzugsweise verklebt oder verschweißt, sein.

Vorteilhafterweise kann vorgesehen sein, dass das Gehäuse einen längsendseitig offenen Gehäusekörper und zwei Gehäuseböden aufweist. Dabei sind die jeweiligen Durchströmungsflächen des Membranblocks dem Gehäusekörper und die Stirnflächen des Membranblocks den Gehäuseböden zugewandt. Der jeweilige Gehäuseboden verschließt den Gehäusekörper längsendseitig und ist mit dem Gehäusekörper luftdicht fest verbunden. Der eine Gehäuseboden ist mit dem Gehäusekörper bevorzugt integral bzw. einstückig ausgeformt. Der andere Gehäuseboden ist mit dem Gehäusekörper bevorzugt verklebt oder verschweißt oder verschraubt.

Bei einer vorteilhaften Ausführungsform des Befeuchters ist vorgesehen, dass zwischen den Durchströmungsflächen des Membranblocks und den gegenüberliegenden Bereichen des Gehäuses insgesamt vier Luftkammern und zwischen den Stirnflächen des Membranblocks und den gegenüberliegenden Bereichen des Gehäuses insgesamt zwei Stirnluftkammern gebildet sind. Die Dichtanordnung ist dabei aus genau drei Ringdichtungen gebildet, die voneinander separat bzw. physikalisch voneinander getrennt sind. Dabei sind drei der vier Luftkammern durch die drei Ringdichtungen voneinander und von der vierten Luftkammer und von den Stirnluftkammern luftdicht abgegrenzt. Die vierte Luftkammer ist dagegen mit den beiden Stirnluftkammern luftleitend und dadurch druckausgleichend verbunden. Bei dieser vorteilhaften Ausführungsform des Befeuchters ist die Anzahl der Ringdichtungen minimiert, so dass die Dichtanordnung besonders einfach ausgeführt und das Abdichten des Befeuchters besonders vereinfacht ist.

Bei einer alternativen Ausführungsform des Befeuchters ist vorgesehen, dass zwischen den Durchströmungsflächen des Membranblocks und den gegenüberliegenden Bereichen des Gehäuses insgesamt vier Luftkammern und zwischen den Stirnflächen des Membranblocks und den gegenüberliegenden Bereichen des Gehäuses insgesamt zwei Stirnluftkammern gebildet sind. Die Dichtanordnung ist dabei aus genau vier Ringdichtungen gebildet, die voneinander separat bzw. physikalisch voneinander getrennt sind. Die vier Luftkammern sind durch die vier Ringdichtungen voneinander luftdicht abgegrenzt. Zudem sind drei der vier Luftkammern durch die Ringdichtungen von den beiden Stirnluftkammern luftdicht abgegrenzt. Die vierte Luftkammer ist dagegen mit den beiden Stirnluftkammern luftleitend und dadurch druckausgleichend verbunden.

In beiden Ausführungsformen des Befeuchters verhindert eine druckausgleichende Verbindung der vierten Luftkammer und den beiden Stirnluftkammern ein Aufblähen des Membranblocks im Betrieb des Befeuchters. Die vierte Luftkammer ist vorzugsweise zum Ableiten der Kathoden-Abluft aus dem Membranblock vorgesehen und weist im Betrieb des Befeuchters das niedrigste Druckniveau auf.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Explosionsansicht eines erfindungsgemäßen Befeuchters in einer ersten Ausführungsform;
- Fig. 2: eine Ansicht eines Gehäusebodens in dem in Fig. 1 gezeigten Befeuchter;
- Fig. 3: eine Ansicht des in Fig. 1 gezeigten Befeuchters ohne einen der Gehäuseböden;
- Fig. 4: eine Ansicht eines Gehäuses des in Fig. 1 gezeigten Befeuchters ohne einen der Gehäuseböden;
- Fig. 5: eine Schnittansicht des in Fig. 1 gezeigten Befeuchters;
- Fig. 6: eine teilweise Ansicht einer Ringdichtung des in Fig. 1 gezeigten Befeuchters;
- Fig. 7 und 8: vergrößerte Schnittansichten des in Fig. 1 gezeigten Befeuchters aus Fig. 5;
- Fig. 9 und 10: eine Ansicht und eine Schnittansicht eines Membranblocks des in Fig. 1 gezeigten Befeuchters mit Ringdichtungen;
- Fig. 11: eine Explosionsansicht des erfindungsgemäßen Befeuchters in einer zweiten Ausführungsform;
- Fig. 12: eine Ansicht des Gehäusebodens in dem in Fig. 11 gezeigten Befeuchter;
- Fig. 13: eine Ansicht des in Fig. 11 gezeigten Befeuchters ohne einen der Gehäuseböden;
- Fig. 14: eine Ansicht des Gehäuses des in Fig. 11 gezeigten Befeuchters ohne einen der Gehäuseböden;
- Fig. 15: eine Ansicht des in Fig. 11 gezeigten Befeuchters ohne einen der Gehäuseböden;
- Fig. 16 und 17: teilweise Schnittansichten des in Fig. 11 gezeigten Befeuchters.

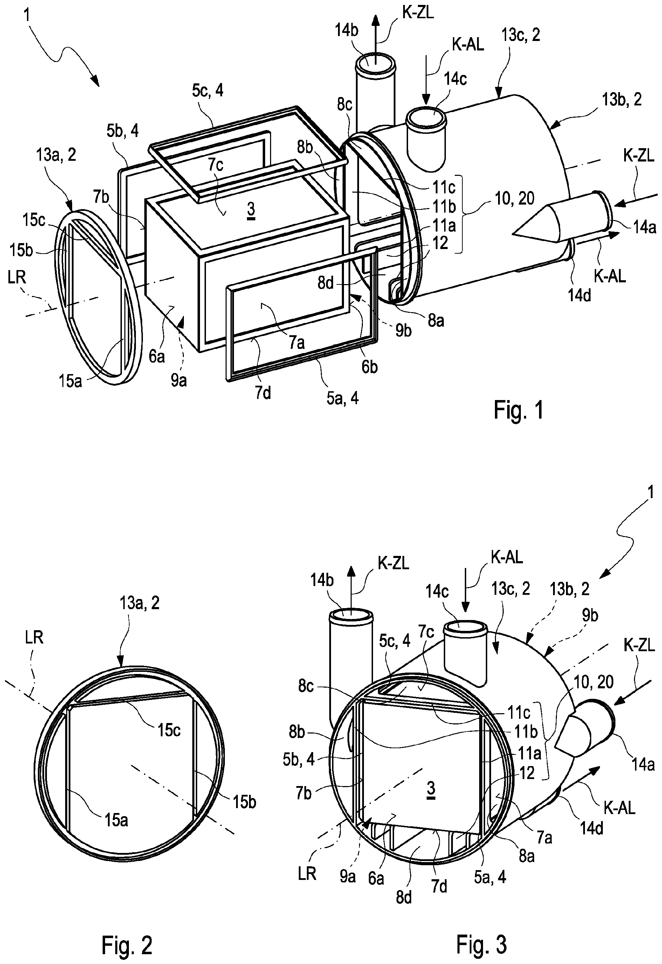

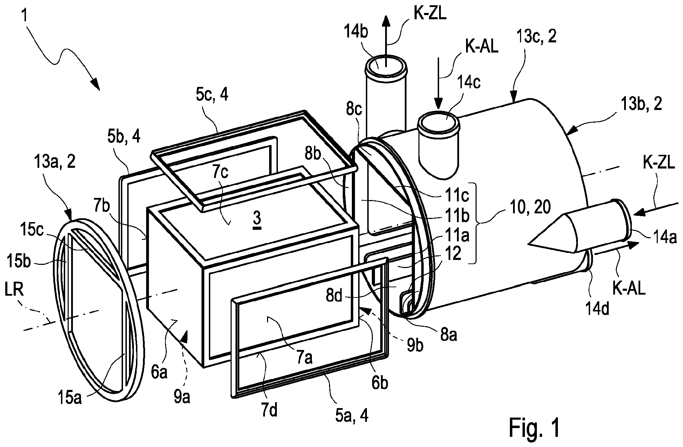

Fig. 1 zeigt eine Explosionsansicht eines erfindungsgemäßen Befeuchters 1 in einer ersten Ausführungsform. Der Befeuchter 1 ist für ein Brennstoffzellensystem zum Befeuchten einer trockenen Kathoden-Zuluft K-ZL mit einer feuchten Kathoden-Abluft K-AL vorgesehen. Das Brennstoffzellensystem kann auf eine dem Fachmann bekannte Weise ausbildet sein und wird hier nicht näher erläutert. Verständlicherweise kommen dabei nur die Brennstoffzellensysteme in Frage, in denen der Befeuchter 1 zweckgemäß anwendbar ist. Der Befeuchter 1 erstreckt sich in Längsrichtung LR und weist ein Gehäuse 2, einen Membranblock 3 und eine Dichtanordnung 4 auf. In der ersten Ausführungsform des Befeuchters 1 ist die Dichtanordnung 4 aus genau drei zueinander identischen Ringdichtungen 5a, 5b, 5c gebildet. In Fig. 1 und auch weiter sind zum Kennzeichnen von nicht unmittelbar sichtbaren und/oder nur teilweise sichtbaren Elementen durchbrochene Pfeile/Linien verwendet.

Das Gehäuse 2 weist einen hohlzylindrischen Gehäusekörper 13c und zwei Gehäuseböden 13a und 13b auf. Demnach weisen der Gehäusekörper 13c einen runden Querschnitt und die Gehäuseböden 13a und 13b jeweils eine darauf angepasste runde Form auf. Es versteht sich jedoch, dass der Querschnitt des Gehäusekörpers 13c auch oval oder vieleckig - also beispielweise quadratisch oder rechteckig - sein kann. Entsprechend können die Gehäuseböden 13a und 13b eine ovale oder vieleckige - also beispielweise quadratische oder rechteckige - Form aufweisen. Der Gehäusekörper 13c ist in Längsrichtung LR ausgerichtet und die Gehäuseböden 13a und 13b verschließen luftdicht den Gehäusekörper 13c axial zur Längsrichtung LR. Der Gehäusekörper 13c ist also längsendseitig mit den Gehäuseböden 13a und 13b luftdicht verschlossen. Dabei ist der Gehäuseboden 13b einstückig mit dem Gehäusekörper 13a ausgeformt und der Gehäuseboden 13a ist mit dem Gehäusekörper 13c festverbunden. Der Gehäuseboden 13a kann mit dem Gehäusekörper 13c beispielweise verklebt oder verschweißt sein.

Der Membranblock 3 ist quaderförmig und weist zwei luftdicht verschlossene und einander gegenüberliegende Stirnflächen 6a, 6b und vier Durchströmungsflächen 7a, 7b, 7c, 7d auf. Der Membranblock 3 ist dabei so in dem Gehäuse 2 aufgenommen, dass die Stirnflächen 6a, 6b den Gehäuseböden 13a, 13b und die Durchströmungsflächen 7a, 7b, 7c, 7d dem Gehäusekörper 13c zugewandt sind. Dadurch sind die Durchströmungsflächen 7a, 7b, 7c, 7d parallel und die Stirnflächen 6a und 6b quer zur Längsrichtung LR ausgerichtet.

Zwischen der jeweiligen Durchströmungsfläche 7a, 7b, 7c, 7d des Membranblocks 3 und einem gegenüberliegenden Bereich des Gehäuses 2 bzw. des Gehäusekörpers 13c ist jeweils eine Luftkammer 8a, 8b, 8c, 8d gebildet. Zwischen den Stirnflächen 6a, 6b und den Gehäuseböden 13a, 13b sind Stirnluftkammern 9a, 9b - in Form von zwei quer zur Längsrichtung ausgerichteten Luftspalte - gebildet. Die jeweilige Luftkammer 8a, 8b, 8c, 8d ist über jeweils einen Stutzen 14a, 14b, 14c, 14d nach außen luftleitend verbunden.

Die Luftkammer 8a ist dabei zum Zuleiten der Kathoden-Zuluft K-ZL zu der Durchströmungsfläche 7a über den Stutzen 14a und die gegenüberliegende Luftkammer 8b ist zum Ableiten der Kathoden-Zuluft K-ZL von der Durchströmungsfläche 7b über den Stutzen 14b vorgesehen. Die Luftkammer 8c ist zum Zuleiten der Kathoden-Abluft K-AL zu der Durchströmungsfläche 7c über den Stutzen 14c und die gegenüberliegende Luftkammer 8d ist zum Ableiten der Kathoden-Abluft K-AL von der Durchströmungsfläche 7d über den Stutzen 14d vorgesehen. Das Zuleiten und das Ableiten der Kathoden-Zuluft K-ZL und der Kathoden-Abluft K-AL sind hier und weiter mit Pfeilen angedeutet.

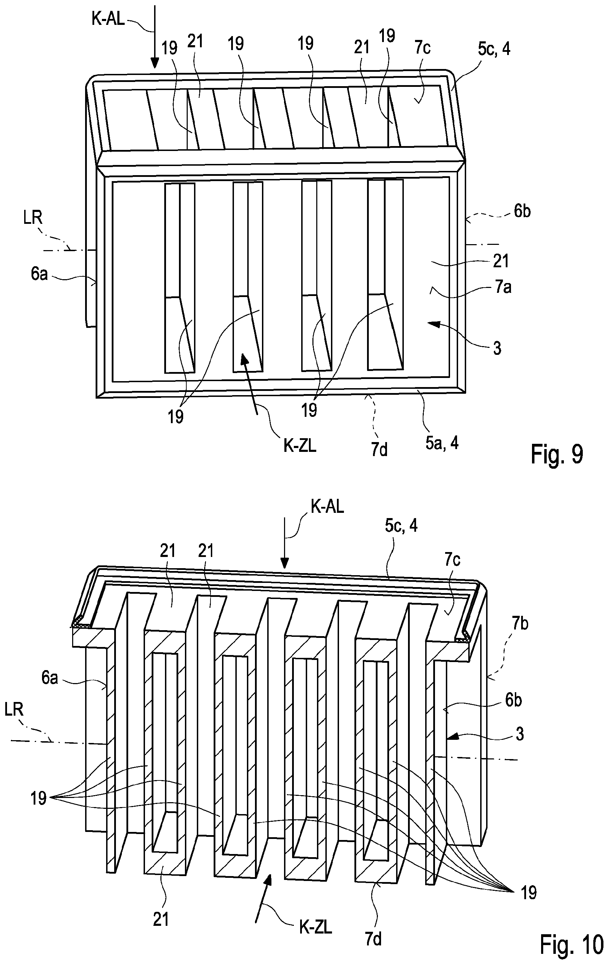

Der Membranblock 3 ist aus mehreren Membranen gebildet, die wasser- bzw. wasserdampfdurchlässig und luftdicht sind. In Fig. 1 und auch weiter ist der Membranblock 3 rein schematisch gezeigt. Die genaue Ausgestaltung des Membranblocks 3 wird im Folgenden anhand Fig. 9-10 näher erläutert. In dem Membranblock 3 werden die Kathoden-Zuluft K-ZL von der Durchströmungsfläche 7a zu der Durchströmungsfläche 7b und die Kathoden-Abluft K-AL von der Durchströmungsfläche 7c zu der Durchströmungsfläche 7d getrennt voneinander geführt. Die Kathoden-Zuluft K-ZL ist trocken und die Kathoden-Abluft K-AL ist feucht, so dass innerhalb des Membranblocks 3 die trockene Kathoden-Zuluft K-ZL mit der feuchten Kathoden-Abluft K-AL befeuchtet und die feuchte Kathoden-Abluft K-AL durch die trockene Kathoden-Zuluft K-ZL entfeuchtet werden kann. Durch die Befeuchtung der trockene Kathoden-Zuluft K-ZL kann die Effizienz des Brennstoffzellensystems verbessert werden.

Die jeweiligen Luftkammern 8a, 8b, 8c, 8d sind innerhalb des Gehäuses 2 mittels der Dichtanordnung 4 luftdicht voneinander getrennt. Wie oben bereits erwähnt, weist die Dichtanordnung 4 in der ersten Ausführungsform des Befeuchters 1 genau drei Ringdichtungen 5a, 5b, 5c auf. Die jeweilige Ringdichtung 5a, 5b, 5c ist der jeweiligen Durchströmungsfläche 7a, 7b, 7c zugeordnet und umläuft die jeweilige Durchströmungsfläche 7a, 7b, 7c randseitig bzw. entlang und beabstandet zu den Verbindungskanten des Membranblocks 3. Auf der Durchströmungsfläche 7d ist dagegen keine Ringdichtung angeordnet. Die jeweilige Ringdichtung 5a, 5b, 5c liegt auf der jeweiligen Durchströmungsfläche 7a, 7b, 7c flach bzw. eben, so dass eine Abwinklung bzw. ein Abknicken der jeweiligen Ringdichtung 5a, 5b, 5c über die Verbindungskanten des Membranblocks 3 vermieden ist.

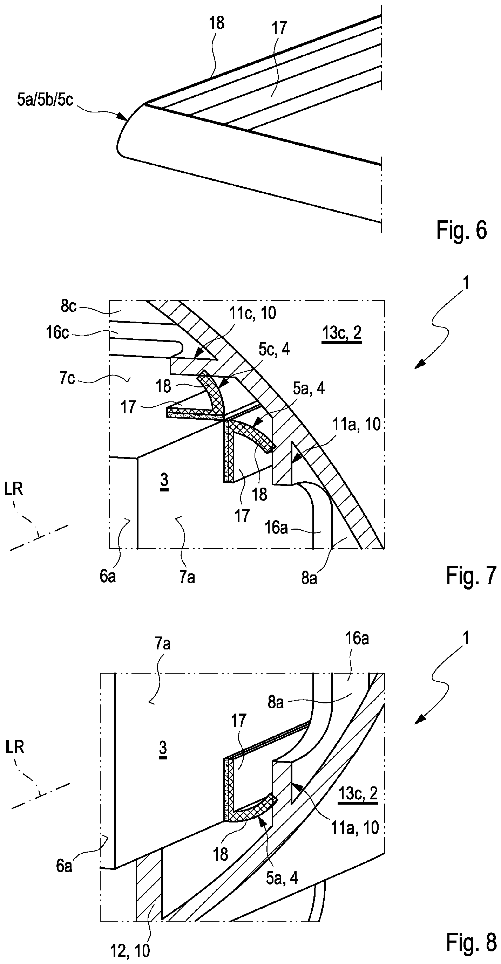

Die genaue Ausgestaltung der jeweiligen Ringdichtung 5a, 5b, 5c wird im Folgenden anhand Fig. 6-8 näher erläutert.

Innerhalb des Gehäusekörpers 13c ist eine innenliegende Stützstruktur 10 ausgeformt, in der der Membranblock 3 drehfest aufgenommen ist. Die Stützstruktur 10 weist dabei drei rahmenartige Dichtflächen 11a, 11b, 11c für die jeweiligen Ringdichtungen 5a, 5b, 5c bzw. für die jeweiligen Durchströmungsflächen 7a, 7b, 7c auf. Die rahmenartigen Dichtflächen 11a, 11b, 11c sind dabei randseitig luftdicht mit dem Gehäuse 2 verbunden. So sind die Dichtflächen 11a, 11b, 11c mit dem Gehäusekörper 13c und dem Gehäuseboden 13b einstückig ausgeformt und mit dem Gehäuseboden 13a luftdicht festverbunden. Ferner umfasst die Stützstruktur 10 vier Stützrippen 12, die den Membranblock 3 an der Durchströmungsfläche 7d abstützen. Die Dichtflächen 11a, 11b, 11c bilden in dem Gehäuse 2 einen einseitig offenen Innenkäfig 20.

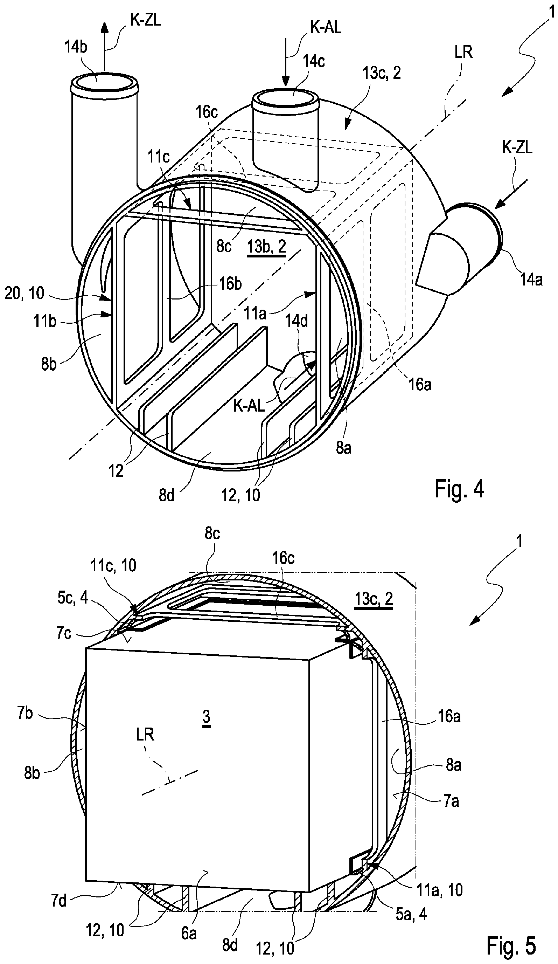

Die jeweilige Ringdichtung 5a, 5b, 5c ist zwischen der jeweiligen Dichtfläche 11a, 11b, 11c und der jeweiligen Durchströmungsfläche 7a, 7b und 7c dichtend angeordnet. Dazu ist die jeweilige Ringdichtung 5a, 5b, 5c mit der zugeordneten Durchströmungsfläche 7a, 7b, 7c verklebt oder verschweißt und an die zugeordnete Dichtfläche 11a, 11b, 11c angepresst. Die genaue Ausgestaltung der Stützstruktur 10 wird im Folgenden anhand Fig. 4 näher erläutert.

In dem Gehäuse 2 sind durch die Dichtanordnung 4 die Luftkammern 8a, 8b, 8c voneinander, von der Luftkammer 8d und von den beiden Stirnluftkammern 9a, 9b luftdicht getrennt. Die Luftkammer 8d ist dagegen luftleitend und dadurch auch druckausgleichend mit den Stirnluftkammern 9a, 9b verbunden. Dadurch kann ein Aufblähen des Membranblocks 3 im Betrieb des Befeuchters 1 vorteilhaft vermieden werden. Da die Luftkammer 8d zum Ableiten der Kathoden-Abluft K-AL aus dem Membranblock 3 vorgesehen ist, weist diese im Betrieb des Befeuchters 1 das niedrigste Druckniveau auf.

Fig. 2 zeigt eine Ansicht des Gehäusebodens 13a in dem Befeuchter 1 in der ersten Ausführungsform. In Fig. 2 sind insbesondere Rillen 15a, 15b, 15c in dem Gehäuseboden 13a für die Dichtflächen 11a, 11b, 11c erkennbar. Innerhalb der Rillen 15a, 15b, 15c werden die Dichtflächen 11a, 11b, 11c luftdicht mit dem Gehäusedeckel 13a festverbunden, beispielsweise verklebt oder verschweißt. Der Gehäuseboden 13a verschließt also axial den Gehäusekörper 13c luftdicht. Dabei werden die Luftkammern 8a, 8b, 8c einzelnen und die Luftkammer 8d und die Stirnluftkammer 9a gemeinsam axial luftdicht verschlossen.

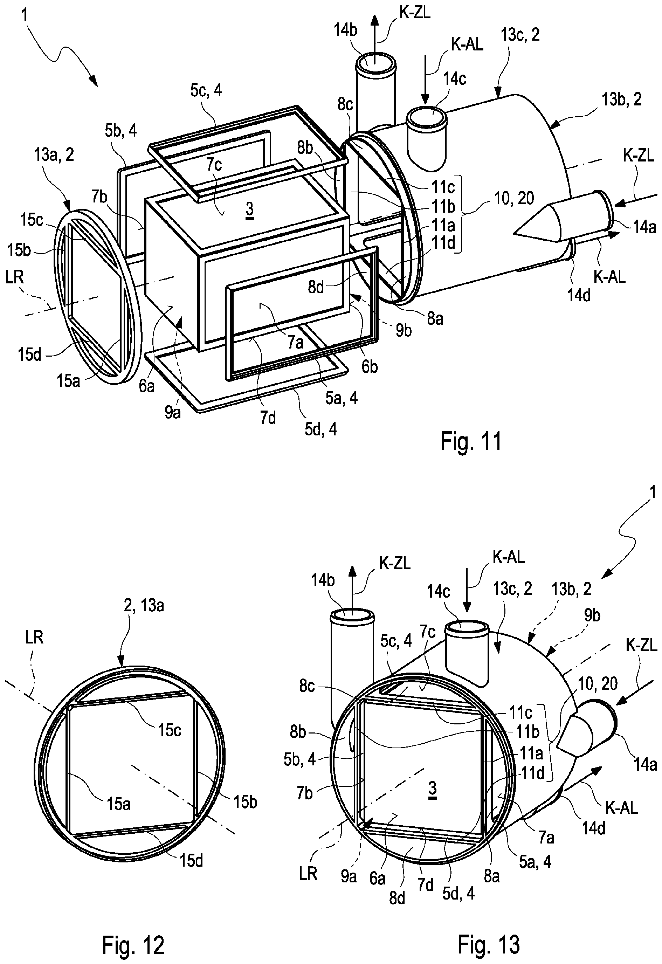

Fig. 3 zeigt eine Ansicht des Befeuchters 1 in der ersten Ausführungsform ohne den Gehäuseboden 13a. Wie in Fig. 3 besonders gut erkennbar, ist der Membranblock 3 in dem Gehäuse 2 quer zur Längsrichtung LR durch die Stützstruktur 10 und in Längsrichtung LR durch die beiden Gehäuseböden 13a und 13b abgestützt. In Fig. 3 ist zudem erkennbar, dass die Lufträume 8a, 8b, 8c, 8d und die jeweilige Stirnluftkammer 6a bzw. 6b quer zur Längsrichtung LR benachbart sind und sich nicht überschneiden bzw. überlappen. Ferner ist erkennbar, dass die luftleitende und druckausgleichende Verbindung zwischen der Luftkammer 8d und der jeweiligen Stirnluftkammer 9a bzw. 9b durch die fehlende Dichtfläche der Stützstruktur 10 - vergleiche dazu Fig. 13 - realisiert ist.

In Fig. 4 ist eine Ansicht des Gehäuses 2 des Befeuchters 1 in der ersten Ausführungsform ohne den Gehäuseboden 13a gezeigt. Hier sind insbesondere Zusatzrippen 16a, 16b, 16c an den Dichtflächen 11a, 11b, 11c der Stützstruktur 10 erkennbar, die den Membranblock 3 an den Durchströmungsflächen 7a, 7b, 7c zusätzlich abstützen.

Fig. 5 zeigt eine Schnittansicht des Befeuchters 1 in der ersten Ausführungsform. In Fig. 5 ist insbesondere die randseitige Anordnung der Ringdichtungen 5a, 5b, 5c an den Durchströmungsflächen 7a, 7b, 7c erkennbar. Die genaue Ausgestaltung der Ringdichtungen 5a, 5b, 5c wird im Folgenden anhand Fig. 6-8 näher erläutert.

Fig. 6 zeigt nun eine teilweise Ansicht einer der jeweiligen zueinander identischen Ringdichtungen 5a, 5b, 5c. Die jeweilige Ringdichtung 5a, 5b, 5c weist dabei einen Dichtrahmen 17 und eine Dichtlippe 18 auf, die von dem Dichtrahmen 17 absteht. Die Dichtlippe 18 ist dabei nach innen bzw. zur Mitte der jeweiligen Ringdichtung 5a, 5b, 5c bzw. zur Mitte der jeweiligen Durchströmungsfläche 7a, 7b, 7c hin geneigt ausgebildet. Die jeweilige Ringdichtung 5a, 5b, 5c ist eben bzw. flach ausgebildet.

Fig. 7 und Fig. 8 zeigen vergrößerte Ausschnitte aus Fig. 5. Wie hier erkennbar, ist der Dichtrahmen 17 der jeweiligen Ringdichtung 5a, 5b, 5c stoffschlüssig mit der zugeordneten Durchströmungsfläche 7a, 7b, 7c verbunden. Die jeweilige Dichtlippe 18 ist dabei zu dem Gehäuse 2 bzw. zu dem Gehäusekörper 13c bzw. zu der Stützstruktur 10 bzw. zu der jeweiligen Dichtfläche 11a, 11b, 11c ausgerichtet und liegt dichtend an dem Gehäuse 2 bzw. an dem Gehäusekörper 13c bzw. an der Stützstruktur 10 bzw. an der jeweiligen Dichtfläche 11a, 11b, 11c an. Dabei umläuft die jeweilige Ringdichtung 5a, 5b, 5c die jeweilige Durchströmungsfläche 7a, 7b, 7c randseitig, so dass die Verbindungskanten des Membranblocks 3 frei bleiben. Dadurch wird insbesondere eine Abwinklung bzw. ein Abknicken der jeweiligen Ringdichtung 5a, 5b, 5c über die Verbindungskanten des Membranblocks 3 vorteilhaft vermieden. Zudem ist der Aufbau der Dichtanordnung 4 insgesamt vereinfacht.

Fig. 9 zeigt eine Ansicht und Fig. 10 zeigt eine Schnittansicht des Membranblocks 3 mit Ringdichtungen 5a, 5b, 5c. In Fig. 9 und Fig. 10 sind nun die Membranen 19 des Membranblocks 3 erkennbar, die quer zur Längsrichtung LR ausgerichtet und zueinander beabstandet angeordnet bzw. gestapelt sind. Die Membranen 19 sind dabei aus einem Material geformt, das wasser- bzw. wasserdampfdurchlässig und luftdicht ist. Zwischen den einzelnen Membranen 19 werden die Kathoden-Zuluft K-ZL und die Kathoden-Abluft K-AL geführt. Zweckgemäß sind zwischen den einzelnen Membranen 19 gebildete Zwischenräume an den Durchströmungsflächen 7a, 7b, 7c, 7d so durch Rahmen 21 geschlossen, dass die Kathoden-Zuluft K-ZL ausschließlich von der Durchströmungsfläche 7a zu der Durchströmungsfläche 7b und die Kathoden-Abluft K-AL ausschließlich von der Durchströmungsfläche 7c zu der Durchströmungsfläche 7d strömen kann. Über die Membranen 19 können die Kathoden-Zuluft K-ZL und die Kathoden-Abluft K-AL Wasser bzw. Wasserdampf miteinander austauschen. Dadurch kann die trockene Kathoden-Zuluft K-ZL durch die feuchte Kathoden-Abluft K-AL befeuchtet werden.

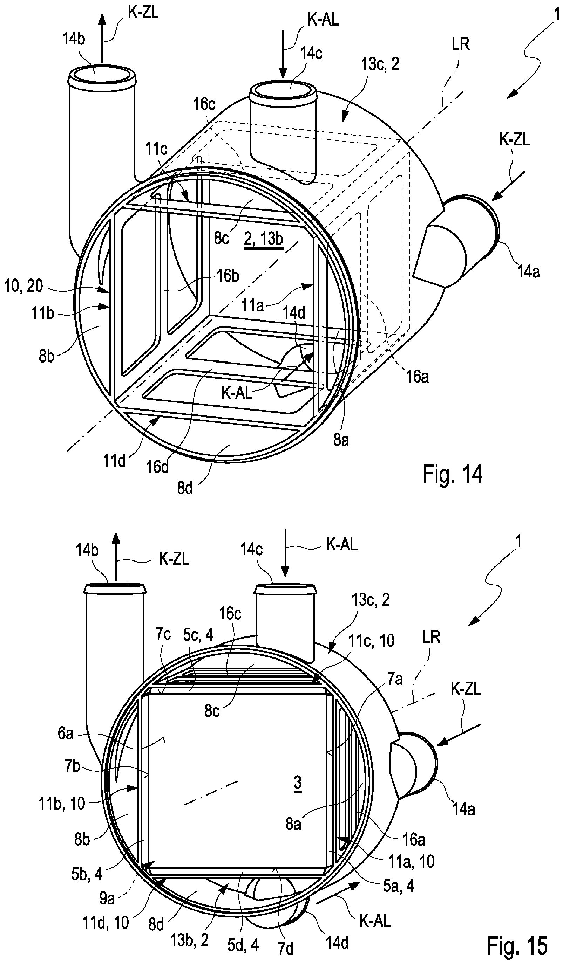

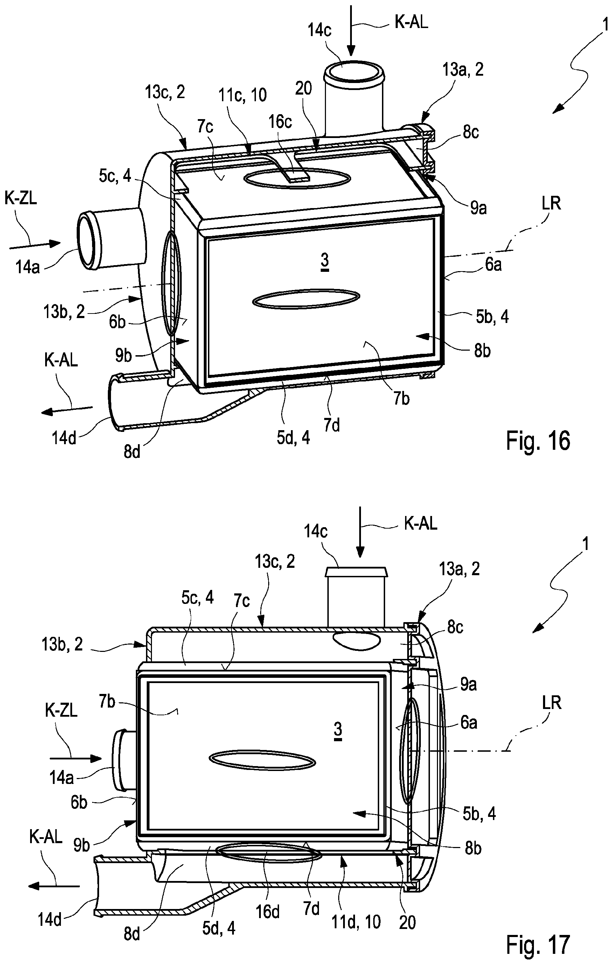

Fig. 11 zeigt eine Explosionsansicht des erfindungsgemäßen Befeuchters in einer zweiten Ausführungsform. Fig. 12 zeigt eine Ansicht des Gehäusebodens 13a in dem in Fig. 11 gezeigten Befeuchter. Fig. 13 zeigt eine Ansicht des in Fig. 11 gezeigten Befeuchters ohne den Gehäuseboden 13a. Fig. 14 zeigt eine Ansicht des Gehäuses 2 des in Fig. 11 gezeigten Befeuchters ohne den Gehäuseboden 13a. Fig. 15 zeigt eine Ansicht des in Fig. 11 gezeigten Befeuchters 1 ohne den Gehäuseboden 13a. Fig. 16 und Fig. 17 zeigen Schnittansichten des Befeuchters 1 in der zweiten Ausführungsform.

Im Folgenden werden die Unterschiede der zweiten Ausführungsform in Fig. 11-17 im Vergleich zu der ersten Ausführungsform in Fig. 1-10 näher erläutert.

Bezugnehmend auf Fig. 11, 13 und 15-17, weist die Dichtanordnung 4 in der zweiten Ausführungsform des Befeuchters 1 genau vier Ringdichtungen 5a, 5b, 5c, 5d auf. Anders formuliert, ist der Durchströmungsfläche 7d des Membranblocks 3 abweichend zu der ersten Ausführungsform des Befeuchters 1 eine weitere Ringdichtung 5d zugeordnet. Die Ringdichtungen 5a, 5b, 5c, 5d in der zweiten Ausführungsform sind zueinander und zu den Ringdichtungen 5a, 5b, 5c in der ersten Ausführungsform identisch.

Bezugnehmend auf Fig. 14, weist die Stützstruktur 10 eine weitere Dichtfläche 11d für die Ringdichtung 5d auf, die zu den Dichtflächen 11a, 11b, 11c identisch ausgeformt ist. Die Dichtflächen 11a, 11b, 11c, 11d bilden in dem Gehäuse 2 den vierseitigen Innenkäfig 20. Ferner ist eine weitere Zusatzrippe 16d zum Abstützen des Membranblocks 3 an der Durchströmungsfläche 7d vorgesehen. Die Durchströmungsfläche 7d ist in dem Gehäuse 2 durch die Dichtfläche 11d und die Zusatzrippe 16d abgestützt, so dass die Stützrippen 12 gemäß der ersten Ausführungsform nicht mehr notwendig und in der zweiten Ausführungsform nicht vorgesehen sind.

In Fig. 16-17 sind zudem die Flächen eingekreist, an denen der Membranblock 3 in dem Gehäuse 2 durch die Zusatzrippen 16a, 16b, 16c, 16d und die beiden Gehäuseböden 13a und 13b zusätzlich und scheuerfrei abgestützt ist.

Bezugnehmend auf Fig. 13 und 15, ist die Ringdichtung 5d zwischen der Durchströmungsfläche 7d und der Dichtfläche 11d dichtend angeordnet. Die Ringdichtung 5d dichtet dabei die Luftkammer 8d zusätzlich von den Luftkammern 8a, 8b, 8c ab. Dennoch ist die Luftkammer 8d luftleitend und dadurch druckausgleichend mit den beiden Stirnluftkammern 9a und 9b verbunden.

Bezugnehmend auf Fig. 11 und 12, ist in dem Gehäuseboden 13a eine weitere Rille 15d für die Dichtfläche 11d vorgesehen. Der Gehäuseboden 13a verschließt axial den Gehäusekörper 13c luftdicht. Dabei werden die Luftkammern 8a, 8b, 8c, 8d und die Stirnluftkammer 9a einzelnen axial luftdicht verschlossen.

Im Übrigen stimmt die zweite Ausführungsform des Befeuchters mit der ersten Ausführungsform des Befeuchters 1 in Fig. 1-10 überein.

## Patentansprüche

1. Befeuchter (1) für ein Brennstoffzellensystem zum Befeuchten einer trockenen Kathoden-Zuluft (K-ZL) mit einer feuchten Kathoden-Abluft (K-AL),
- wobei der Befeuchter (1) ein Gehäuse (2), einen quaderförmigen Membranblock (3) aus mehreren quer zu einer Längsrichtung (LR) des Membranblocks (3) zueinander beabstandet gestapelten Membranen (19) und eine Dichtanordnung (4) aufweist,
- wobei der Membranblock (3) zwei luftdicht verschlossene und einander gegenüberliegende Stirnflächen (6a,6b) und vier den Umfang des Membranblocks (3) bildende Durchströmungsflächen (7a,7b,7c,7d) aufweist,- wobei der Membranblock (3) in dem Gehäuse (2) so aufgenommen ist, dass zwischen der jeweiligen Durchströmungsfläche (7a,7b,7c,7d) des Membranblocks (3) und einem gegenüberliegenden Bereich des Gehäuses (2) jeweils eine Luftkammer (8a,8b,8c,8d) zum Zuleiten oder Ableiten der Kathoden-Abluft (K-AL) oder der Kathoden-Zuluft (K-ZL) zu/aus dem Membranblock (3) gebildet ist,
- wobei die jeweiligen Luftkammern (8a,8b,8c,8d) innerhalb des Gehäuses (2) mittels der Dichtanordnung (4) luftdicht voneinander getrennt sind,
**dadurch gekennzeichnet,**
- **dass** die Dichtanordnung (4) aus drei oder vier voneinander separaten Ringdichtungen (5a,5b,5c,5d) gebildet ist, wobei die jeweilige Ringdichtung (5a,5b,5c,5d) jeweils einer der Durchströmungsflächen (7a,7b,7c,7d) des Membranblocks (3) zugeordnet ist, und
- **dass** die jeweilige Ringdichtung (5a,5b,5c,5d) die jeweilige zugeordnete Durchströmungsfläche (7a,7b,7c,7d) randseitig umläuft und zwischen der jeweiligen Durchströmungsfläche (7a,7b,7c,7d) und dem Gehäuse (2) dichtend angeordnet ist.

2. Befeuchter nach Anspruch 1,
**dadurch gekennzeichnet,**
**dass** das Gehäuse (2) eine innenliegende Stützstruktur (10) aufweist und die jeweiligen Ringdichtungen (5a,5b,5c,5d) zwischen den jeweiligen Durchströmungsflächen (7a,7b,7c,7d) des Membranblocks (3) und der Stützstruktur (10) des Gehäuses (2) dichtend angeordnet sind.

3. Befeuchter nach Anspruch 2,
**dadurch gekennzeichnet,**
- **dass** die Stützstruktur (10) durch einen quaderförmigen bereichsweise offenen Innenkäfig (20) gebildet ist und der Membranblock (3) in dem Innenkäfig (20) aufgenommen ist, und
- **dass** die jeweiligen Ringdichtungen (5a,5b,5c,5d) zwischen den jeweiligen Durchströmungsflächen (7a,7b,7c,7d) des Membranblocks (3) und dem Innenkäfig (20) dichtend angeordnet sind.

4. Befeuchter nach einem der Ansprüche 1 bis 3,
**dadurch gekennzeichnet,**
**dass** die jeweilige Ringdichtung (5a,5b,5c,5d) mit der jeweiligen zugeordneten Durchströmungsfläche (7a,7b,7c,7d) stoffschlüssig verbunden, vorzugsweise verklebt oder verschweißt, ist.

5. Befeuchter nach einem der Ansprüche 1 bis 4,
**dadurch gekennzeichnet,**
- **dass** die Ringdichtung (5a,5b,5c,5d) einen Dichtrahmen (17) und eine von dem Dichtrahmen (17) abstehende Dichtlippe (18) aufweist,
- **dass** der Dichtrahmen (17) von der Dichtlippe (18) abgewandt mit der zugeordneten Durchströmungsfläche (7a,7b,7c,7d) stoffschlüssig verbunden, vorzugsweise verklebt oder verschweißt, ist, und
- **dass** die Dichtlippe (18) zu dem Gehäuse (2) gerichtet ist und an dem Gehäuse (2) dichtend anliegt.

6. Befeuchter nach einem der Ansprüche 1 bis 5,
**dadurch gekennzeichnet,**
**dass** die jeweilige Ringdichtung (5a,5b,5c,5d) die jeweilige zugeordnete Durchströmungsfläche (7a,7b,7c,7d) des Membranblocks (3) nach innen beabstandet umläuft, so dass der jeweiligen Durchströmungsfläche (7a,7b,7c,7d) zugeordnete Verbindungskanten frei liegen und die jeweilige Ringdichtung (5a,5b,5c,5d) über die jeweiligen Verbindungskanten nicht übergeht.

7. Befeuchter nach einem der Ansprüche 1 bis 6,
**dadurch gekennzeichnet,**
- **dass** zwischen den Durchströmungsflächen (7a,7b,7c,7d) des Membranblocks (3) und den gegenüberliegenden Bereichen des Gehäuses (2) insgesamt vier Luftkammern (8a,8b,8c,8d) und zwischen den Stirnflächen (6a, 6b) des Membranblocks (3) und den gegenüberliegenden Bereichen des Gehäuses (2) insgesamt zwei Stirnluftkammern (9a, 9b) gebildet sind,
- **dass** die Dichtanordnung (4) aus drei voneinander separaten Ringdichtungen (5a,5b,5c) gebildet ist, und
- **dass** drei der vier Luftkammern (8a,8b,8c) durch die drei Ringdichtungen (5a,5b,5c) voneinander und von der vierten Luftkammer (8d) und von den Stirnluftkammern (9a, 9b) luftdicht abgegrenzt sind und die vierte Luftkammer (8d) mit den beiden Stirnluftkammern (9a, 9b) luftleitend und dadurch druckausgleichend verbunden ist.

8. Befeuchter nach einem der Ansprüche 1 bis 6,
**dadurch gekennzeichnet,**
- **dass** zwischen den Durchströmungsflächen (7a,7b,7c,7d) des Membranblocks (3) und den gegenüberliegenden Bereichen des Gehäuses (2) insgesamt vier Luftkammern (8a,8b,8c,8d) und zwischen den Stirnflächen (6a, 6b) des Membranblocks (3) und den gegenüberliegenden Bereichen des Gehäuses (2) insgesamt zwei Stirnluftkammern (9a, 9b) gebildet sind,
- **dass** die Dichtanordnung (4) aus vier voneinander separaten Ringdichtungen (5a,5b,5c,5d) gebildet ist,
- **dass** die vier Luftkammern (8a,8b,8c,8d) durch die vier Ringdichtungen (5a,5b,5c,5d) voneinander luftdicht abgegrenzt sind, und
- **dass** drei der vier Luftkammern (8a,8b,8c) durch die Ringdichtungen (5a,5b,5c) von den beiden Stirnluftkammern (9a, 9b) luftdicht abgegrenzt sind und die vierte Luftkammer (8d) mit den beiden Stirnluftkammern (9a, 9b) luftleitend und dadurch druckausgleichend verbunden ist.

9. Befeuchter nach Anspruch 7 oder 8,
**dadurch gekennzeichnet,**
**dass** die vierte Luftkammer (8d) zum Ableiten der feuchter Kathoden-Abluft (K AL) aus dem Membranblock (3) vorgesehen ist und im Betrieb des Befeuchters (1) das niedrigste Druckniveau aufweist.

10. Befeuchter nach einem der Ansprüche 1 bis 9,
**dadurch gekennzeichnet,**
- **dass** das Gehäuse (2) einen längsendseitig offenen Gehäusekörper (13c) und zwei Gehäuseböden (13a, 13b) aufweist, wobei die jeweiligen Durchströmungsflächen (7a,7b,7c,7d) des Membranblocks (3) dem Gehäusekörper (13c) und die Stirnflächen (6a, 6b) des Membranblocks (3) den Gehäuseböden (13a, 13b) zugewandt sind, und
- **dass** der jeweilige Gehäuseboden (13a, 13b) den Gehäusekörper (13c) längsendseitig verschließt und mit dem Gehäusekörper (13c) luftdicht festverbunden, bevorzugt verklebt oder verschweißt oder verschraubt, ist.

## Revendications

1. Humidificateur (1) destiné à un système de pile à combustible pour humidifier de l'air soufflé de cathodes (K-ZL) sec avec de l'air expulsé de cathodes (K-AL) humide,
- dans lequel l'humidificateur (1) présente un boîtier (2), un bloc de membrane (3) parallélépipédique consistant en plusieurs membranes empilées espacées les unes des autres transversalement par rapport à une direction longitudinale (LR) du bloc de membrane (3) et un agencement d'étanchéité (4),
- dans lequel le bloc de membrane (3) présente deux surfaces frontales (6a, 6b) fermées hermétiquement et opposées l'une à l'autre et quatre surfaces d'écoulement (7a, 7b, 7c, 7d) formant le périmètre du bloc de membrane (3), dans lequel le bloc de membrane (3) est reçu dans le boîtier (2) de sorte qu'entre les surfaces d'écoulement (7a, 7b, 7c, 7d) respectives du bloc de membrane (3) et une zone opposée du boîtier (2) respectivement une chambre à air (8a, 8b, 8c, 8d) est formée pour amener ou évacuer l'air expulsé de cathodes (K-AL) ou l'air soufflé de cathodes (K-ZL) au/depuis le bloc de membrane (3),
- dans lequel les chambres à air (8a, 8b, 8c, 8d) respectives sont séparées hermétiquement les unes des autres à l'intérieur du boîtier (2) au moyen de l'agencement d'étanchéité (4), **caractérisé en ce que**
- l'agencement d'étanchéité (4) est formé de trois ou quatre bagues d'étanchéité (5a, 5b, 5c, 5d) séparées les unes des autres, dans lequel la bague d'étanchéité (5a, 5b, 5c, 5d) respective est associée respectivement à l'une des surfaces d'écoulement (7a, 7b, 7c, 7d) du bloc de membrane (3), et
- **en ce que** la bague d'étanchéité (5a, 5b, 5c, 5d) respective entoure côté bord les surfaces d'écoulement (7a, 7b, 7c, 7d) respectives associées et est disposée de manière étanche entre les surfaces d'écoulement (7a, 7b, 7c, 7d) respectives et le boîtier (2).

2. Humidificateur selon la revendication 1,
**caractérisé en ce que**
le boîtier (2) présente une structure de support (10) intérieure et les bagues d'étanchéité (5a, 5b, 5c, 5d) respectives sont disposées de manière étanche entre les surfaces d'écoulement (7a, 7b, 7c, 7d) respectives du bloc de membrane (3) et la structure de support (10) du boîtier (2).

3. Humidificateur selon la revendication 2,
**caractérisé en ce que**
- la structure de support (10) est formée par une cage intérieure (20) parallélépipédique ouverte par endroits et le bloc de membrane (3) est reçu dans la cage intérieure (20), et
**en ce que** les bagues d'étanchéité (5a, 5b, 5c, 5d) respectives sont disposées de manière étanche entre les surfaces d'écoulement (7a, 7b, 7c, 7d) respectives du bloc de membrane (3) et la cage intérieure (20).

4. Humidificateur selon l'une quelconque des revendications 1 à 3,
**caractérisé en ce que**
la bague d'étanchéité (5a, 5b, 5c, 5d) respective est reliée, de préférence collée ou soudée, par complémentarité de matière à la surface d'écoulement (7a, 7b, 7c, 7d) respective associée.

5. Humidificateur selon l'une quelconque des revendications 1 à 4,
**caractérisé en ce que**
- la bague d'étanchéité (5a, 5b, 5c, 5d) présente un cadre d'étanchéité (17) et une lèvre d'étanchéité (18) dépassant du cadre d'étanchéité (17),
- **en ce que** le cadre d'étanchéité (17) opposé à la lèvre d'étanchéité (18) est reliée, de préférence collée ou soudée, par complémentarité de matière à la surface d'écoulement (7a, 7b, 7c, 7d) associée, et
- **en ce que** la lèvre d'étanchéité (18) est dirigée vers le boîtier (2) et s'appuie de manière étanche sur le boîtier (2).

6. Humidificateur selon l'une quelconque des revendications 1 à 5,
**caractérisé en ce que**
la bague d'étanchéité (5a, 5b, 5c, 5d) respective entoure de manière espacée vers l'intérieur la surface d'écoulement (7a, 7b, 7c, 7d) respective associée du bloc de membrane (3), de sorte que les bords de liaison associés à la surface d'écoulement (7a, 7b, 7c, 7d) respective sont exposées et la bague d'étanchéité (5a, 5b, 5c, 5d) respective ne passe pas au-dessus des bords de liaison respectifs.

7. Humidificateur selon l'une quelconque des revendications 1 à 6,
**caractérisé en ce que**
- entre les surfaces d'écoulement (7a, 7b, 7c, 7d) du bloc de membrane (3) et les zones opposées du boîtier (2), quatre chambres à air (8a, 8b, 8c, 8d) au total sont formées et entre les surfaces frontales (6a, 6b) du bloc de membrane (3) et les zones opposées du boîtier (2), deux chambres à air frontales (9a, 9b) au total sont formées,
- **en ce que** l'agencement d'étanchéité (4) est formé à partir de trois bagues d'étanchéité (5a, 5b, 5c) séparées les unes des autres, et
- **en ce que** trois des quatre chambres à air (8a, 8b, 8c) sont délimitées hermétiquement les unes des autres par les trois bagues d'étanchéité (5a, 5b, 5c) et sont délimitées hermétiquement par la quatrième chambre à air (8d) et par les chambres à air frontales (9a, 9b), et la quatrième chambre à air (8d) est reliée aux deux chambres à air frontales (9a, 9b) de manière à laisser circuler l'air et à équilibrer la pression.

8. Humidificateur selon l'une quelconque des revendications 1 à 6,
**caractérisé en ce que**
- entre les surfaces d'écoulement (7a, 7b, 7c, 7d) du bloc de membrane (3) et les zones opposées du boîtier (2), quatre chambres à air (8a, 8b, 8c, 8d) au total sont formées et entre les surfaces frontales (6a, 6b) du bloc de membrane (3) et les zones opposées du boîtier (2), deux chambres à air frontales (9a, 9b) au total sont formées,
- **en ce que** l'agencement d'étanchéité (4) est formé à partir de quatre bagues d'étanchéité (5a, 5b, 5c, 5d) séparées les unes des autres,
- **en ce que** les quatre chambres à air (8a, 8b, 8c, 8d) sont délimitées hermétiquement les unes des autres par les quatre bagues d'étanchéité (5a, 5b, 5c, 5d), et
- **en ce que** trois des quatre chambres à air (8a, 8b, 8c) sont délimitées hermétiquement des deux chambres à air frontales (9a, 9b) par les bagues d'étanchéité (5a, 5b, 5c) et la quatrième chambre à air (8d) est reliée aux deux chambres à air frontales (9a, 9b) de manière à laisser circuler l'air et à équilibrer la pression.

9. Humidificateur selon la revendication 7 ou 8,
**caractérisé en ce que**
la quatrième chambre à air (8d) est prévue pour évacuer l'air expulsé de cathodes (KAL) humide du bloc de membrane (3) et présente le niveau de pression le plus bas lors du fonctionnement de l'humidificateur (1).

10. Humidificateur selon l'une quelconque des revendications 1 à 9,
**caractérisé en ce que**
- le boîtier (2) présente un corps de boîtier (13c) ouvert côté extrémité longitudinale et deux fonds de boîtier (13a, 13b), dans lequel les surfaces d'écoulement (7a, 7b, 7c, 7d) respectives du bloc de membrane (3) sont tournées vers le corps de boîtier (13c) et les surfaces frontales (6a, 6b) du bloc de membrane (3) sont tournées vers les fonds de boîtier (13a, 13b), et
- **en ce que** le fond de boîtier (13a, 13b) respectif ferme le corps de boîtier (13c) côté extrémité longitudinale et est fixé solidement, de préférence collé ou soudé ou vissé, hermétiquement au corps de boîtier (13c).

## Claims

1. Humidifier (1) for a fuel cell system for humidifying a dry cathode supply air (K-ZL) with a humid cathode waste air (K-AL),
- wherein the humidifier (1) has a housing (2), a cuboid membrane block (3) consisting of a plurality of membranes (19) stacked at a distance from one another transversely to a longitudinal direction (LR) of the membrane block (3), and a sealing arrangement (4),
- wherein the membrane block (3) has two end surfaces (6a, 6b) which are closed in an airtight manner and lie opposite one another and four flow-through surfaces (7a, 7b, 7c, 7d) forming the circumference of the membrane block (3), - wherein the membrane block (3) is accommodated in the housing (2) in such a way that an air chamber (8a, 8b, 8c, 8d) is formed in each case between the respective flow-through surface (7a, 7b, 7c, 7d) of the membrane block (3) and an opposite region of the housing (2) for supplying or discharging the cathode waste air (K-AL) or the cathode supply air (K-ZL) to/from the membrane block (3),
- wherein the respective air chambers (8a, 8b, 8c, 8d) inside the housing (2) are separated from one another in an airtight manner by means of the sealing arrangement (4), **characterised in that**
- the sealing arrangement (4) is formed from three or four annular seals (5a, 5b, 5c, 5d) which are separate from one another, wherein the respective annular seal (5a, 5b, 5c, 5d) is associated in each case with one of the flow-through surfaces (7a, 7b, 7c, 7d) of the membrane block (3), and
- **in that** the respective annular seal (5a, 5b, 5c, 5d) runs around the edge of the respective associated flow-through surface (7a, 7b, 7c, 7d) and is arranged in a sealing manner between the respective flow-through surface (7a, 7b, 7c, 7d) and the housing (2).

2. Humidifier according to claim 1,
**characterised in that**
the housing (2) has an internal support structure (10) and the respective annular seals (5a, 5b, 5c, 5d) are arranged in a sealing manner between the respective flow-through surfaces (7a, 7b, 7c, 7d) of the membrane block (3) and the support structure (10) of the housing (2).

3. Humidifier according to claim 2,
**characterised in that**
- the support structure (10) is formed by a cuboid internal cage (20) which is open in some regions, and the membrane block (3) is accommodated in the internal cage (20), and
- **in that** the respective annular seals (5a, 5b, 5c, 5d) are arranged in a sealing manner between the respective flow-through surfaces (7a, 7b, 7c, 7d) of the membrane block (3) and the internal cage (20).

4. Humidifier according to any of claims 1 to 3,
**characterised in that**
the respective annular seal (5a, 5b, 5c, 5d) is materially bonded, preferably glued or welded, to the respective associated flow-through surface (7a, 7b, 7c, 7d).

5. Humidifier according to any of claims 1 to 4,
**characterised in that**
- the annular seal (5a, 5b, 5c, 5d) has a sealing frame (17) and a sealing lip (18) projecting from the sealing frame (17),
- **in that** the sealing frame (17), facing away from the sealing lip (18), is materially bonded, preferably glued or welded, to the associated flow-through surface (7a, 7b, 7c, 7d), and
- **in that** the sealing lip (18) is directed towards the housing (2) and bears against the housing (2) in a sealing manner.

6. Humidifier according to any of claims 1 to 5,
**characterised in that**
the respective annular seal (5a, 5b, 5c, 5d) runs around the respective associated flow-through surface (7a, 7b, 7c, 7d) of the membrane block (3) at an inwardly spaced distance, such that connecting edges associated with the respective flow-through surface (7a, 7b, 7c, 7d) are exposed and the respective annular seal (5a, 5b, 5c, 5d) does not pass over the respective connecting edges.

7. Humidifier according to any of claims 1 to 6,
**characterised in that**
- a total of four air chambers (8a, 8b, 8c, 8d) are formed between the flow-through surfaces (7a, 7b, 7c, 7d) of the membrane block (3) and the opposite regions of the housing (2), and a total of two end air chambers (9a, 9b) are formed between the end surfaces (6a, 6b) of the membrane block (3) and the opposite regions of the housing (2),
- **in that** the sealing arrangement (4) is formed from three annular seals (5a, 5b, 5c) which are separate from one another, and
- **in that** three of the four air chambers (8a, 8b, 8c) are delimited in an airtight manner from one another and from the fourth air chamber (8d) and from the end air chambers (9a, 9b) by the three annular seals (5a, 5b, 5c), and the fourth air chamber (8d) is connected to the two end air chambers (9a, 9b) in an air-conducting and thus pressure-equalising manner.

8. Humidifier according to any of claims 1 to 6,
**characterised in that**
- a total of four air chambers (8a, 8b, 8c, 8d) are formed between the flow-through surfaces (7a, 7b, 7c, 7d) of the membrane block (3) and the opposite regions of the housing (2), and a total of two end air chambers (9a, 9b) are formed between the end surfaces (6a, 6b) of the membrane block (3) and the opposite regions of the housing (2),
- **in that** the sealing arrangement (4) is formed from four annular seals (5a, 5b, 5c, 5d) which are separate from one another,
- **in that** the four air chambers (8a, 8b, 8c, 8d) are delimited from one another in an airtight manner by the four annular seals (5a, 5b, 5c, 5d), and
- **in that** three of the four air chambers (8a, 8b, 8c) are delimited in an airtight manner from the two end air chambers (9a, 9b) by the annular seals (5a, 5b, 5c), and the fourth air chamber (8d) is connected to the two end air chambers (9a, 9b) in an air-conducting and thus pressure-equalising manner.

9. Humidifier according to claim 7 or 8,
**characterised in that**
the fourth air chamber (8d) is provided for discharging the humid cathode waste air (KAL) from the membrane block (3) and has the lowest pressure level during operation of the humidifier (1).

10. Humidifier according to any of claims 1 to 9,
**characterised in that**
- the housing (2) has a housing body (13c) open at the longitudinal end and two housing bases (13a, 13b), wherein the respective flow-through surfaces (7a, 7b, 7c, 7d) of the membrane block (3) face the housing body (13c) and the end surfaces (6a, 6b) of the membrane block (3) face the housing bases (13a, 13b), and
- **in that** the respective housing base (13a, 13b) closes the housing body (13c) at the longitudinal end and is firmly bonded, preferably glued or welded or screwed, to the housing body (13c) in an airtight manner.
